# EUROPEAN PATENT SPECIFICATION

(11) **EP 3 820 179 B1**
(45) Date of publication and mention of the grant of the patent: **02.11.2022**
(21) Application number: 19207799.8
(22) Date of filing: 07.11.2019
(51) Int. Cl.: H04W 12/06, H04W 4/70, H04W 36/12, H04W 8/18, H04W 8/20, H04W 88/16, H04W 92/02, H04L 101/375

(54) **DEVICE AND METHOD FOR CONNECTING A USER DEVICE WITH A NETWORK VIA A TELECOMMUNICATION HUB**
GERÄT UND VERFAHREN ZUM VERBINDEN EINES BENUTZERGERÄTS MIT EINEM NETZWERK ÜBER EINEN TELEKOMMUNIKATIONS-HUB
DISPOSITIF ET PROCEDE POUR CONNECTER UN DISPOSITIF UTILISATEUR A UN RESEAU VIA UN HUB DE TELECOMMUNICATION

(43) Date of publication of application: 12.05.2021
(73) Proprietor: 1NCE GmbH, 50676 Köln (DE)
(72) Inventor: SATOR, Alexander, 50676 Köln (DE); ALLAKI, Younes, 50676 Köln (DE); KOHNENMERGEN, Dietmar, 50676 Köln (DE)
(74) Representative: Eisenführ Speiser

(56) References cited:
- EP-A1- 2 658 333
- EP-A1- 3 500 053
- WO-A1-2016/130447
- US-A1- 2016 234 681
- "CSPS and EPC Procedure v1 3_5 August 2016", ITU-T DRAFT; STUDY PERIOD 2017-2020; STUDY GROUP 15, INTERNATIONAL TELECOMMUNICATION UNION, GENEVA ; CH , vol. ties/2 24 March 2017 (2017-03-24), pages 1-11, XP044221466, Retrieved from the Internet: URL:https://www.itu.int/ifa/t/2017/sg2/doc s/170329/td/ties/gen/T17-SG02-170329-TD-GE N-0061!!ZIP-E.zip/CSPS and EPC Procedure v1 3_5 August 2016.pdf [retrieved on 2017-03-24]

## Description

The invention relates to a telecommunication system and a corresponding method for data transmission between a user device and eligible mobile core networks. Moreover, the invention relates to a system for authenticating and routing said data transmission. The invention generally relates to telecommunication systems, in particular in the field of machine-to-machine communications and the internet of things.

Usually a user device employs a so called "SIM card" in order to connect and authenticate telecommunication services with a mobile core network of a mobile network operator (MNO) or mobile virtual network operator (MVNO). The term "SIM card" relates to a universal integrated circuit card (UICC) or embedded universal integrated circuit card (eUICC) which executes a subscriber identity module (SIM) application. The "SIM card" is typically issued by the mobile network operator or mobile virtual network operator, respectively. In principle, the SIM application serves to securely protect an international mobile subscriber identity (IMSI) number. Primarily, the IMSI number is a unique user specific number to identify a user. In practice, SIM cards are released by an MNO/MVNO together with a user specific IMSI number. Thus, the SIM card and the user specific IMSI number are assigned to a specific MNO/MVNO.

Typically, an MNO owns and operates an access network and a mobile core network. The access network may be employed by a mobile device to connect to the mobile core network, wherein in a non-roaming case the access network, the IMSI and the mobile core network are assigned to the same MNO. The access network is a telecommunication network that comprises infrastructure such as radio base stations in order to transmit and connect with a mobile core network. A mobile core network is a telecommunication network core part that offers services to customers. The mobile core network connects and routes data to public telecommunication networks, such as PSTN (public switched telephone network) or the public internet or other operators' mobile core networks. Thus, the key function of the mobile core network is to authenticate, authorize, and account a user device, to provide telecommunication services like voice, messages and data and provides the connectivity within the own network and to other public networks.

In order to claim telecommunication services from the mobile network operator, a user device requires authentication with the mobile network operator. Therefore, the mobile core network of a mobile network operator comprises a home location register (HLR) for the 2G/3G telecommunication standard and/or a home subscriber server (HSS) for the 4G, NB-loT and CAT-M telecommunication standard. The HLR/HSS usually stores subscriber related information like IMSI of the home mobile network operator, location information, Access Point Names (APN), and information about the services that a user with a particular IMSI is allowed to consume.

In order to authenticate services, the user device transmits an authentication request including the IMSI to the mobile core network of the home mobile network operator that issued the SIM card via the access network of the visited mobile network operator. Within the mobile core network of the home mobile network operator, the IMSI of the user device is matched to a copy of the IMSI stored in the HLR/HSS to identify whether and which services the user is allowed to use in the network of the visited network operator. If it is found that services are allowed for the specific user, this information will be given to the access network and the user is allowed to use these services like voice, SMS and data in the visited access network including the corresponding access technology. Otherwise, in the case the user is not allowed to use services in this access network, the HLR/HSS will reject the authentication request and will send this reject to the access network. Thus, the user is not able to roam in this access network and has to look for a different access network operator, who has a corresponding business agreements with the home network operators.

Moreover, there is opportunity for mobile network operators that do not own a radio license and do not have an own radio access infrastructure, to provide services to users. Such an operator is called mobile virtual network operator (MVNO). An MVNO is characterized in that an MVNO rents radio access infrastructure from an MNO and does either have its own mobile core network infrastructure or rents the mobile core network infrastructure from an MVNE (Mobile Virtual Network Enabler). The MVNO can connect to a public network. The capabilities of the mobile core network infrastructure are dependent of the selected supplier/MVNE. On this basis an MVNO provides own services to users. Therefore, an MNO may also release an IMSI sub-range to the MVNO, who can perform the user authentication and authorization by itself.

Typically, an MVNO is bound to a mobile network operator that provides, in a non-roaming case, the radio access infrastructure via business agreements. Further, in case of missing of own roaming agreements, the MVNO is bound to use the roaming agreements of the MNO, when the user is roaming abroad. This is caused by the usage of an IMSI sub-range of the MNO, which the MVNO has got from the MNO due to the business agreement. From the perspective of a roaming partner this IMSI sub-range belongs to the MNO and the roaming partner is not aware of that this IMSI sub-range now belongs to the MVNO.

Based on these roaming agreements, the user is able to authenticate and to use services of an MVNO, when he is roaming abroad. This means in case of using the MNO IMSI sub-range for roaming the user device is able to authenticate and to setup a connection via the access network of the roaming partner and the mobile core network of the MNO that has e.g. a business agreement with the MVNO. During an authentication request of a user device, the roaming partner recognizes the corresponding IMSI as an MNO IMSI and sends the request to the MNO core network. When the request is received by the MNO core network the IMSI will be recognized to be assigned to the MVNO, for example by the last couple of IMSI digits. Accordingly, based on the IMSI, the authentication request is forwarded at the mobile core network of the MNO to the mobile core network infrastructure owned/rented by the MVNO, which comprises an own HLR/HSS for authentication and service authorization. Based on the authorized services the authenticated user device is able to setup a connection via the roaming partner access network, MNO core network and MVNO core network to a public network. Therefore, typically the MVNO may only get access to the corresponding roaming access networks which do have a roaming agreement with the MNO. Further, the MVNO is also limited in his service offering, due to the roaming business agreement between the MNO and the roaming partner and the supported capabilities of the core network supplier/MVNE.

Thus, an MVNO is typically bound to a particular MNO and particular core network supplier/MVNE via business agreements. As an effect, user and MVNO are bound to the services and the network of a specific MNO and a core network supplier/MVNE.

### BACKGROUND ART

US patent application 20140051423A1 relates to a multi-IMSI SIM arranged to select one of the IMSIs and a network for data communication. The selection may be in particular be on the basis of signal strength, reliability, and or cost.

The PCT application WO2011041913A1 relates to a wireless monitoring system comprising a remote asset about which data is to be collected and a wireless datatransfer device connected to the remote asset. The wireless device includes a radiofrequency transceiver and a chip having a memory for storing a plurality of subscriber identifiers corresponding to different wireless networks and for further storing logic that constitutes network selection rules for selecting one of the wireless networks to use for transmission of the data. In a GSM/UMTS implementation of this technology, the subscriber identifier is the IMSI and the chip is a Subscriber Identity Module (SIM) chip or card. By using multiple IMSI's, the wireless datatransfer device connected to the remote asset may switch seamlessly between wireless networks. A new IMSI (for a new network) may be provisioned over the air to enable the device to communicate over a new network for which it did not previously have an IMSI.

EP 2 658 333 A1 relates to a method and a system for APN(Access Point Name) correction in a GPRS data roaming scenario where a sponsor operator network is used and a method and system for routing GTP messages to the correct destination network entity after actuating the APN correction as and when required. The GTP filter checks the IMSI and APN data in the GTP layer and, depending on the IMSI and APN data performs APN correction and manipulates GTP parameters to ensure the PDP Context is correctly established between the SGSN and the GGSN, and the further GTP Control or Data messages bypass the GTP Filter application. This solution allows appropriate routing of message, in particular for message to and from smartphone.

EP 3 500 053 A1 relates to examples selecting a device such as a gateway. One or more IP packets carrying a session establishing request are received and an address of one of a plurality of gateways is selected based on information on a wireless terminal included in the session establishing request, the selected address is set as a destination address of the IP packets.

The document "CSPS and EPC Procedure v1 3_5 August 2016", ITU-T DRAFT; STUDY PERIOD 2017 - 2020;STUDY GROUP 15, INTERNATIONAL TELECOMMUNICAITON UNION, GENEVA; ch; vol. ties/2 24 March 2017 ( 2017-03-24), pages 1 -11, XP044221466, relates to the attach procedure in 2/3/4G.

The prior art allows to selectively choose an IMSI according to a preferred access network belonging to the mobile network operator the IMSI is assigned to. On the other hand, the mobile virtual network operator is still dependent on the mobile core network operator the IMSI belongs to. The IMSI specifies both the access network and the mobile core or virtual mobile core network to connect for example to a public network.

Thus, existing telecommunication systems are highly inflexible in the choice of the access and core network technology and network operator. Therefore, use of telecommunication services is rendered expensive for a user. Moreover, where a network coverage of the particular network operator is not sufficient or a needed access technology like NB-loT is not available, there may be issues for a device to establish a connection at all.

### PROBLEM TO BE SOLVED

The invention is defined by the appended claims.

In view of the above, it is an object of the invention to make a user more flexible in the choice of the access and core networks as well as the specific network operators for telecommunication services to connect to the public network. The claimed solution allows for choosing the first mobile core network by using the user specific number. A user specific number may for example be an international
mobile subscriber identity number (IMSI), assigned to said first core network. The claimed solution allows for choosing a second core network to connect to a public network by, firstly routing the data to a communication device by assigning the access point name of the communication device to the user specific number. And secondly, by routing the data received by the communication device to a second core network by assigning a second access point name and/or IP-address of the second core network to the user specific number at the routing and signaling means (GTP proxy controller/GPC) of the communication device.

This solution has the advantage that the user becomes independent from specific mobile core network technology or mobile core network operator and provides the capability to combine the right mobile access network with the right mobile core network. Depending on the chosen user specific number the first mobile core network is chosen. The choice of the user specific number used by the first user device may depend on user preferences, i.e. what services are required and what mobile core operator provides these services to what conditions. The data is routed to the communication device in accordance with the APN assigned to the user specific number (IMSI). The communication device may be available/reachable under different access point names. Typically, a DNS server resolves the access point name into an IP- address corresponding to the address of the routing and signaling means (GPC) of the communication device. The communication device may also be available under different IP-addresses corresponding to different access point names (APN) assigned to the communication device. This establishment allows that the communication device may be available under one APN corresponding to one IP-address assigned to the GPC or under several APN corresponding an IP-address of the GPC or the communication device is available under several APNs corresponding to different IP-addresses referring to the GPC. This, allows to assign different APN to different IMSI although still routing the data to the communication device. User preferences specifying which combination of IMSI and APN correspond to which second core network may be stored in a database authorizing the IMSI to the first core network and the communication device. The combination of APN and IMSI identifies the second core network to be chosen. Alternatively, the second core network can be chosen by the operator of the communication device.

Further, the information which combination of IMSI and/or APN correspond to which second core network is stored in a database coupled to the signaling and routing means (GPC). The signaling and routing means (GPC) identify upon receiving a request message containing the IMSI and the APN the communication device by matching the IMSI and the APN to user and network specific information stored in the database coupled to the GPC. Accordingly, the GPC can change the APN and/or IP-address associated with the request message to transmit the request to the second core network. The operator or the user may adjust the user specific information relating to the second core network and which combination of IMSI and APN corresponds to which second core network. The user and network specific information can include information specific to the user and information specific to the network. In another embodiment the user and network specific information include only network specific information. And in another embodiment the user and network specific information include only user specific information.

The claimed solution allows to assign a APN to the communication device. In this case dependent on the IMSI a first core network is chosen. After receipt of a request message the GPC routes the message to a second core network chosen by the operator by assigning a second core network to the APN and storing this information in the database coupled to the signaling and routing means. The claimed solution also allows to assign to each IMSI the same APN, but then, after receipt of the request message identifies the second core network by means of the IMSI, although the APN is the same for all user devices (each device has a different IMSI). Thereby, allowing to uniquely identify a second core network by means of the IMSI. The GPC then replaces the IP address of the received APN and/or the APN of the request message with the IP-address and/or APN of the corresponding second core network and routes the request message accordingly to the second core network. The claimed invention also allows to assign each IMSI an access point name of the communications device, wherein the assigned access point name assigned to each IMSI determines the second core network. User devices would, if the user specific information specify that said devices should connect to different second core networks, have assigned different APNs/or IP addresses. The communication device would assign an APN of the communications device to the IMSI during authentication in accordance with the information stored in the HLR/HSS. The GPC in this case would identify the second core network by means of the combination of IMSI and/or APN stored in the second database coupled to the GPC or by the APN alone. Respectively, the GPC is able to identify user specific services by means of the IMSI and/or APN or by the IMSI alone. The ability to identify the second core network by matching the IMSI and/or APN to user specific information allows for a variety of possibilities to choose the second core network, while the first core network is determined by the chosen user specific number (IMSI).

While the second core network is chosen by the IMSI and/or APN of the communications device the routing to the second core network to connect to the public network is determined by the assignment of the second IP-address of the access point name of the second core network at the routing and signaling means of the communication device. The communication device then routes the data according to the second IP-address to the second core network belonging to said access point name. Thereby, allowing for the arbitrary combination of first core network with corresponding access networks, to which the user device is connected to with a second core network which connects to a public network allowing for the user to optimize mobile services and connection costs.

(A0) This objective is solved by a communication device comprising a database (HLR/HSS), routing and signaling means (GPC), signaling means (STP,DRA) the communication device configured to receive from a first user device via a first core network an authentication request comprising a user specific number assigned to a particular mobile network operator, wherein the user specific number is selected from a plurality of user specific numbers stored in the first user device, and wherein a first database of the communication device comprises a plurality of user specific numbers and access point names of the communications device assigned to user profiles, and wherein each of the user specific numbers is assigned to a mobile network operator and the user. The communication device authenticates the user device and authorizes the user device to the access network. Thus, the access network is determined by the user specific number. The communication device (HLR/HSS) authenticates and authorizes the user device for user specific services by matching the user specific number to one of the user specific numbers of the plurality of the user specific numbers stored in the database, and sends a response message including the access point name of the communication device to the serving support gateway (SGSN, MME). The communication device is configured to be available under one or more access point names, which can be translated within a Domain Name Server (DNS) to one or more corresponding IP-addresses of the communication device. The communication device is configured to receive data at the routing and signaling means (GPC) and to route said received data to a second core network depending on the user specific number (IMSI) and/or the APN of the communications device by matching the user specific number (IMSI) and/or the APN of the communication device to the user and network specific information stored in the database coupled to the routing and signaling means (GPC), said user and network specific information specifying an access point name and/or an IP-address of a second core network to which the data is routed to. Thereby, the communication device allows to choose the first core network the user device connects to by means of the user specific number and chooses the second core network dependent on the user specific number and the APN of the communications device. Thus, the communication device allows couple different core networks in an arbitrary manner.

The inventors have found, that user specific numbers assigned to different mobile network operators stored in the first device in combination with the communication device including a database storing a copy of these user specific numbers for service authentication allows a user to decouple the first device not only from the mobile core network it is connected to but also from a particular second mobile network operator for connecting to the public network. In particular, by identifying the second core network operator by matching the user specific number and/or the address of the communication device, transmitted during the attach procedure to user specific information stored in the communication device. And by subsequently routing the data to the identified second core network.

In particular, such a communication device provides opportunity to a user to transmit data using access and mobile core networks of eligible mobile network operators. Accordingly, infrastructure, such as access and mobile core networks, of either mobile network operator assigned to one of the user specific numbers may be employed for data transmission. Thus, a user device is not restricted to access and mobile core networks of a particular mobile network operator. It is a major advantage of this embodiment that the user device is allowed to select an access network for data transmission which in the current situation is most preferable to the user and to select a core network to connect, for example to a public network independent of the access network. Therefore, costs issued to connect with the public network may be reduced. Also, a high network coverage may be provided. Therefore, with the system of the claimed invention the general flexibility, the cost and the connectivity of participants may be significantly improved.

A first device may for example be a mobile device, a computer, a tablet or any other terminal that maybe employed for machine-to-machine communication. A communication network device may be called a communication device, in the sense of the claimed invention, that may be stored on a server or any other kind of hardware. In particular, the communication device may be distributed over one or more hardware devices. Additionally, the functionality of a corresponding communication device may be established by renting suitable working space from a universal server or public hardware. Further, the term mobile network operator may also comprise a mobile virtual network operator that rents infrastructure from the mobile network operator or mobile network enabler. A mobile virtual network enabler is a mobile virtual network operator that owns telecommunication infrastructure such as mobile access or core networks. The mobile virtual network enabler may use the telecommunication structure in own affairs, as a mobile virtual network operator, or may rent the telecommunication infrastructure to a mobile virtual network operator that may conduct own business agreements.

(A1) According to a further preferred embodiment the communication device is configured to initialize a connection for data transfer to a public network by connecting the first core network, to which the user device is attached to, with a second core network assigned to the authorized user specific services. Accordingly, the first mobile core network employed for authentication of the first user device may be decoupled from the second mobile core network for connecting to the public internet. The communication device acts as an intermediary. Thus, the user is not bound to single operator and more flexible in the choice of desired core networks to connect to the public network.

(A2) According to a further preferred embodiment to initialize a connection for data transfer to a public network comprises sending an authentication response to the first mobile core network of the mobile network operator assigned to the selected user specific number, wherein the authentication response comprises information identifying the communication device, such as an access point name, and establishing a data connection between the first device and the communication device. Based on the user specific number and the APN of the communication device identifying a second mobile core network assigned to the authenticated user specific services, the mobile core network of the mobile network operator is enabled to route data from the first device via the communication device to the mobile core network of a second mobile core network operator or virtual mobile network operator. Thus, data from the first device may be routed from the first mobile core network to the second mobile core network that provides the best conditions to a client for connecting to the public internet.

(A3) According to a further preferred embodiment, the first mobile core network of the mobile network operator assigned to the selected user specific number is configured to route data from the first device via the communication device to the second mobile core network according to user specific information. The first user device receives an authentication response message containing the access point name of the communication device. The communication device routes the data to the second core network according to an access point name specified by the user specific information. By that, the communication device acts as an intermediary between the first and the second core mobile core network, providing decoupling of both networks.

(A4) According to a further preferred embodiment, the first device comprises an integrated circuit storing a module including a plurality of user specific numbers, wherein each of the plurality of user specific numbers is assigned to a mobile network operator. It is a major advantage of this embodiment that the first device may store user specific numbers each assigned to a different mobile network operator.

A user may choose the user specific number assigned to the mobile network operator that provides the most preferable conditions to the user to connect to the communications device. Or as an alternative, a core network can be chosen by updating the SIM applet storing the IMSI by Over-the-air(OTA) update from a OTA-server according to updated user preferences. As such, a user is not bound to a particular mobile network operator.

(A5) In another embodiment, the first user device stores one user specific number assigned to a mobile network operator. The first device, in this embodiment connects to the communication device, always via the network of the mobile network operator the user specific number belongs to. In the case the first device is roaming outside the access network of the mobile network operator, the first user device connects to the communication device via the access networks belonging to roaming partners of the mobile network operator the user specific number belongs to and the mobile network operator the user specific number belongs to. The second core network is chosen by matching the selected IMSI of the user and/or access point name of the communication device transmitted during the attach request to the first user device to user and network specific information stored in a database of the communications device.

(A6) According to a further preferred embodiment the integrated circuit stores a program that selects the user specific number of a desired mobile network operator according to predetermined criteria. Accordingly, an application may run on the integrated circuit which may automatically select one particular user specific number of a mobile network operator that provides preferable conditions to a user. This program may for example run in the background and support a user in a manner that does require any further interaction by a user.

(A7) According to another preferred embodiment, the predetermined criteria comprise one or more of a country, network availability, data volume and/or user preferences. Therefore, a user specific number assigned to the mobile network operator which provides the best services for the user may be chosen. For example, the mobile network operator may be selected that operates the most preferable access network for data transmission, such as the cheapest, the fastest or the network with the best network coverage. The predetermined criteria likewise specify user preferences according to which the second core network to connect to the public network is chosen. For example, the mobile operator of the second core network may have a gateway to connect to the public network located in the same regions as the user run his business.

(A8) A communication device according any of the preceding preferred embodiments, wherein the database comprises user specific services assigned to each of the user specific numbers. The information stored in the database identify a mobile core network to route data to the public internet by the IMSI or by assigning a particular APN of the communication device. In particular, the mobile network operator of the second core network that connects the first device to the public network is independent of the mobile network operator which runs access and core networks. For example, the user specific services may identify a corresponding mobile network enabler based on business agreement, price, user preferences and/or the predetermined criteria.

(A9) In a further preferred embodiment the first device, the communications device and the core network are configured to communicate based on the GSM, GPRS, UMTS, LTE, 5G, NB-loT or CAT-M telecommunication standard. It is important to note, that the devices involved in the system may communicate with any telecommunication standard. As such, the system is not bound to any particular telecommunication standard.

(A10) In another preferred embodiment the communication device selects the second core network dependent on the access point name received from the first device or dependent on the user specific number received from the first device or as an alternative the communication device selects the second core network dependent on the combination of IMSI and APN.

(A11) In another embodiment the communication device has more than one access point names. The each of the access point name corresponds to an IP-address assigned to the routing and signaling means of the communication device. The routing and signaling means couple the first and second core network.

(A12) In another preferred embodiment the communication device has more than one access point name corresponding to different IP-addresses of more than one routing and signaling means. The one or more routing and signaling means may be virtual systems running on the same or distinct platform or hardware. The one or more routing and signaling means may be the same component.

(A13) In another embodiment, the routing and signaling means, for example a GPC, comprise a database including user and network specific information which allows in dependence to the address of the communication device, for example the access point name, and the user specific number of a request message from the first device to identify the second core network.

(A14) In another embodiment the communication device overwrites the APN and/or the IP-address of the request message before transmitting it to the second core network. Providing the APN and IP address of the second core network.

(A15) In another embodiment the second database is part of the signaling and routing means, for example the GPC, the database can be implemented as hardware or software and can be coupled internally or externally by using corresponding interfaces.

(A16) In another preferred embodiment all user profiles and preferences are stored in one database.

(A17) According to a further aspect of the invention the previously mentioned object is also solved by a method for communication comprising a step of receiving, at a communication device, an authentication request from a first device, the authentication request comprising a user specific number assigned to a particular mobile network operator, wherein the user specific number is received via a first core network of the mobile network operator assigned to the user specific number, and wherein the user specific number is selected from a plurality of user specific numbers stored in the first device, wherein each user specific number of the plurality of user specific numbers is assigned to a mobile network operator. The method further comprises a step of authorizing user specific services by successfully matching the user specific number to a plurality of user specific numbers stored in a database in the communication device and the method further comprises a step of initializing a connection for data transfer with the first device via the first mobile core network of the mobile network operator assigned to the received user specific number and the communication device.

According to this method, a user is able to select the access network of the network operator that provides a most preferable conditions for accessing a telecommunication network.

(A18) According to a further embodiment of the method, comprising the step of initializing, at the communication device, a connection for data transfer to a public network via a second mobile core network assigned to the authorized user specific services. Transmitting the data received from the first device via the first core network to the public network via the second core network. Thereby, decoupling the first and second core network.

(A19) According to a further embodiment of said method initializing a connection for data transfer to a public network comprises sending an authentication response to the first mobile core network of the mobile network operator assigned to the received user specific number, wherein the authorization response comprises the access point name of the communication device and the IMSI. The communication device identifies the second core network dependent on the combination of IMSI of the first user device and access point name of the communication device.

(A20) According to a further embodiment of said method the address of the communications device, for example the APN, received at the routing and signaling means, which can be an GPC, is matched to an address stored in a second database. The second database includes user and network specific information including the IP-address and/or access point names of the second core network. Data from the first user device is routed by the routing and signaling means (GPC) to the second core network in accordance with the IP-address of the identified user profile. Alternatively, the GPC can choose the second core network according to a global setting.

(A21) According to a further embodiment of said method dependent on the IMSI received at the routing and signaling means (GPC) is matched to a user and network specific information stored in the second database. The user and network specific information including the APN and/or IP-address of the second core network. Data from the first user device is routed by the GPC to the second core network in accordance with the APN and/or IP-address of the identified user and network specific information.

(A22) According to a further embodiment, the method comprising the step of, at the first mobile core network of the mobile network operator assigned to the selected user specific number, routing data from the first device via the communication device to the second mobile core network assigned to the authorized user specific services.

(A23) According to a further embodiment, the method further comprises the step of selecting, by a program stored in the first device, the user specific number of a desired mobile network operator according to user preferences and/or predetermined criteria.

(A24) In another embodiment, the communications device acts as an intermediary connecting a first mobile core network and a second core network transmitting data or sms services.

(A25) In another embodiment the user and network specific information include user specific information and network specific information. The user specific information may contain, for example, a user specific number, such as an IMSI. The network specific information may, for example, include and APN and/ or a IP-address of the second core network.

(A26) In another embodiment the user and network specific information may include user specific information. In one embodiment the user and network specific information may include a user specific number.

(A27) In another embodiment the user and network specific information may include network specific information. In one embodiment the user and network specific information include an access point name and/or a IP-address of the second core network.

The advantages and further embodiments of the previously described method are analogue to the embodiments and advantages of the previously described system.

It shall be understood that a preferred embodiment of the present invention can also be any combination of the dependent claims or above embodiments with the respective independent claim.

It shall further be understood, that the identification of the second core network can be done by any suitable parameter contained in the Update Location ACK message. Suitable in the sense that it allows to distinguish different user from another. In one embodiment describe above only the user specific number is used to determine the second core network.

It shall further be understood that the invention is not restricted to packet switched network. The skilled person understands how to implement the underlying idea of connecting core networks to provide more flexibility to the user, in a circuit switched network using, for example voice or SMS services.

These and other aspects of the invention will be apparent from and elucidated with reference to the embodiments described hereinafter.

### BRIEF DESCRIPTION OF THE DRAWINGS

In the following drawings:
Fig. 1 schematically illustrates a system for data transmission between a user device and a core network of an eligible core network operator to an embodiment.
Fig. 2 schematically illustrates a system for data transmission with selected network operators for different telecommunication standards.
Fig. 3 schematically shows an authorization procedure for a system using the 4G telecommunication standard.

### DETAILED DESCRIPTION OF EMBODIMENTS

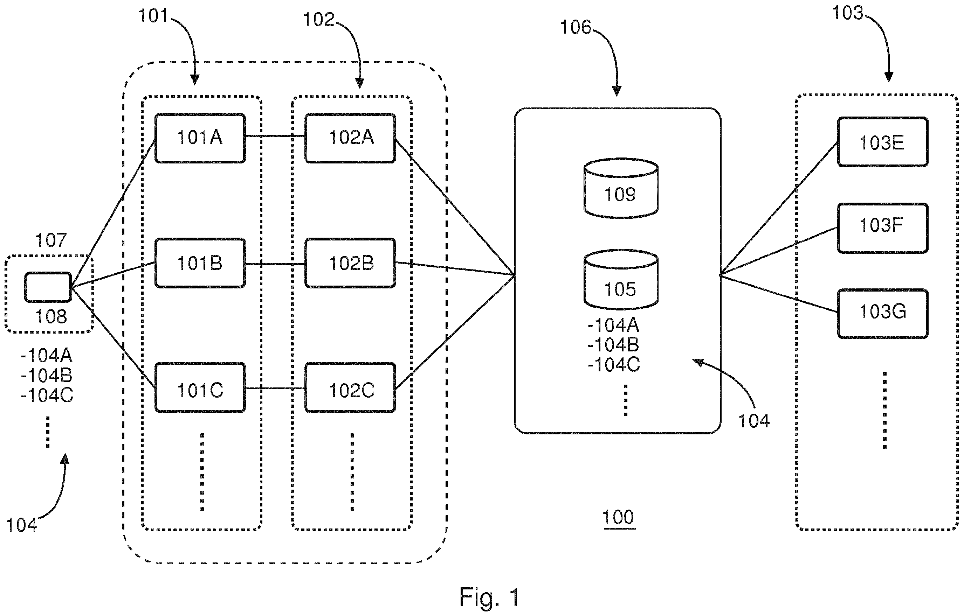

Fig. 1 shows a system 100 for data transmission between a user device 107 and an eligible mobile core network 103 for connecting and routing data to a public network via a first mobile core network corresponding to the access network the user device (107) is connected to. The system comprises a user device 107, such as a mobile, a tablet or a terminal for machine-to-machine communication. The user device 107 comprises a SIM card 108, such as an UICC/eUICC, running a SIM application. The SIM application securely stores one or a plurality of user specific numbers 104. Each user specific number 104A, 104B, 104C of the plurality of user specific numbers 104 is assigned to a mobile network operator A, B, C. A user specific number may for example be an IMSI.

The system further comprises at least one access network 101. Each access network 101A-C is owned and operated by one of the mobile network operators A, B, C. An access network 101 comprises infrastructure such as radio base stations for the user device 107 to connect to the mobile core network 102 of one of the mobile network operators A, B, C. Thus, a user specific number 104A, 104B, 104C assigned to a mobile network operator A, B, C is coupled to the access network 101A, 101B, 101C of the same mobile network operator A, B, C that operates the access network 101, e.g. the user specific number 104A of mobile network operator A is coupled to the access network 101A of the same mobile network operator A.

Moreover, the system 100 comprises mobile core networks 102. Each mobile core network 102A, 102B, 102C is operated and owned by mobile network operators A, B, C. Wherein the mobile core network 102A, 102B, 102C of a particular mobile network operator A, B, C is coupled to the corresponding access network 101A, 101B, 101C of the same network operator A, B, C and the user specific number 104A, 104B, 104C of the same network operator A, B, C, e.g. the core network 102A of network operator A is coupled to the access network 101A of network operator A and the user specific number 104A of the network operator A.

Further, the user specific number 104A, 104B, 104C belong to a mobile network operator (MNO) A, B, C which can be rented by a mobile virtual network operator.

Further, the system 100 comprises a communication device that acts as a communication device 106. A communication device 106 may be physical device and/or software implemented. Each of the core networks 102A, 102B, 102C may connect to the communication device 106 for data transmission. Further, the communication device 106 is configured to authenticate user devices and to authorize user specific services based on the user specific number 104A, 104B, 104C. In particular, the communication device 106 may route data from the user device 107 to a core network 103 of a network operator E, F, G to connect to a public network. As an example, the user specific services determine the core network 103. The communication device 106 comprises a home location register (HLR) and/or a home subscriber server (HSS) 105. The HLR/HSS 105 is in principle a database comprising at least a copy of the plurality of user specific numbers 104 each assigned to a network operator A, B, C. Further, user specific services may be assigned to each of the user specific numbers 104A, 104B, 104C stored in the HLR/HSS 105. These user specific services may for example determine a mobile core network 103 of a specific mobile core network operator to connect and transfer data to an open public network. Further, the authorized user specific service may define a mobile communication service that a user is allowed to use with specific mobile network operators, such as for example a data transmission rate or access type or service type.

The system 100 further comprises mobile core networks 103 to connect to a public network such as internet or public switched telephone network. Each mobile core network 103 may be owned and operated by a different mobile virtual network operator or mobile virtual network enabler E, F, G. The mobile virtual network enabler may rent the infrastructure to a mobile virtual network operator. The communication device 106 is configured to connect to either of the mobile core networks 103 in order to rout data to a public network. It may be understood, that each of the network operators E, F, G owning and operating one of the core networks 103 may be the same as the network operators A, B, C owning the access networks 101 and core networks 102 or may also be different.

The SIM card 108 runs an application that is configured to select a user specific number assigned to a particular network operator A, B, C. The selection of a user specific number may be performed such that the mobile network is selected which is most favorite to the user, e.g. on the basis of user preferences, network coverage, business agreements, country, country area. The mobile device 107 transmits the selected user specific number 104A, 104B, 104C assigned to a particular network operator A, B, C in an authentication request to the communication device 106 for authentication. After successful authentication user specific services are authorized. The transmission of the authentication request is performed via the access network 101 and the mobile core network 102 operated by the mobile network operator A, B, C assigned to selected user specific number 104A, 104B, 104C.

In the mobile core network 102 of the mobile network operator A, B, C assigned to the selected user specific number 104A, 104B, 104C, the user specific number 104A, 104B, 104C is recognized as related to the provider of the communication device 106, for example by a number of digits. Thus, the mobile core network 102 routes the selected user specific number 104A, 104B, 104C to the communication device 106.

In the communication device 106, the user specific number in the authentication request is forwarded to the HLR/HSS 105 where the user specific number is matched to a copy of the plurality of user specific numbers 104 stored in the HLR/HSS 105. If the matching is successful the user device will be authenticated and authorized to use user specific services, which are assigned to the selected user specific number. The user specific services include the APN which is used to address the communication device. The communication device 106 transmits a APN of the communication device back to the first core network 102. The DNS server of the first core network 102 resolves the APN into an IP-address. The communication device may be addressed by one or more APN and the transmitted APN is selected in the HLR/HSS dependent on the user specific number. The APN or the combination of the IMSI and the APN may determine the second core network 103.

The hub 106 comprises a second database 109 storing user specific number 108, APN and IP address of the second core network 103 to identify the second core network 103 by matching the user specific number 104 and/or the APN (identified in initial the authentication request by matching the user specific number to the plurality of user specific numbers 104) of the communications device to the user and network specific information stored in the database 109. For example, the database may contain data pairing the user specific number of the first user device and the APN of the communications device with the APN and/or IP-address of the second core network 103. Thereby, allowing to identify the second core network 104 by matching the user specific number and/or the APN of the communication device to the data of the second database 109.

Further, in an embodiment, the communication device 106 may also determine a mobile core network 103 of a mobile virtual network enabler E, F, G by its own volition, for example according to the authentication and authorized services and/or other circumstances such as, business agreements, current prices and/or network availability.

In another embodiment, the communication device 106 may determine a mobile core network 103 of the mobile virtual network enabler or mobile virtual network operator E, F, G in accordance with the combination of IMSI and APN received in the data connection procedure of the mobile device.

After successful authorization, an Update Location Answer message comprising an APN of the communication device is transmitted to the mobile core network 102 of the mobile network operator A, B, C, assigned to the user specific number and optionally to the first user device. Afterwards the access network 101 starts with the data connection procedure and sends a Create Session Request message to the communication device including APN and IMSI. The communication device can dependent on the combination of APN and IMSI and the information stored in the database 109 route data from the mobile core network 102 via the communication device 106 to the mobile core network 103.

The communication device 106 is configured to route the data to different second core networks in accordance with the combination of IMSI and APN transmitted in the CREATE SESSION REQUEST message. For example, the communications device assigns a new IP-address corresponding to the second core network when receiving the CREATE SESSION REQUEST message or assigns a new APN corresponding to the second core network.

Upon authentication and authorization, a connection for data transmission may be established between the user device 107 via the access network 101 and the mobile core network 102 of one of the mobile network operators A, B, C assigned to the selected user specific number 104A, 104B, 104C and the communication device 106 to the mobile core network 103 of one of the mobile virtual network operators/enablers E, F, G assigned to the combination of APN and or IMSI.

It may be understood that the mobile network operators A, B, C that operate and own the access networks 101A, 101B, 101C and the mobile core networks 102A, 102B, 102C may be same or different from the enablers or operators E, F, G that operate the mobile core networks 103E, 103F, 103G for connecting to the public network. It may further be understood that each one of the mobile core networks 103E, 103F, 103G operators may be a network operator that owns the networks and its hardware and radio license or a mobile virtual network enabler that rents a mobile core network to a mobile virtual network operator or a mobile network operator. It may further be understood, that the enumeration of the mobile network operators and the operated networks is not limiting, but there may be more or less operators and networks.

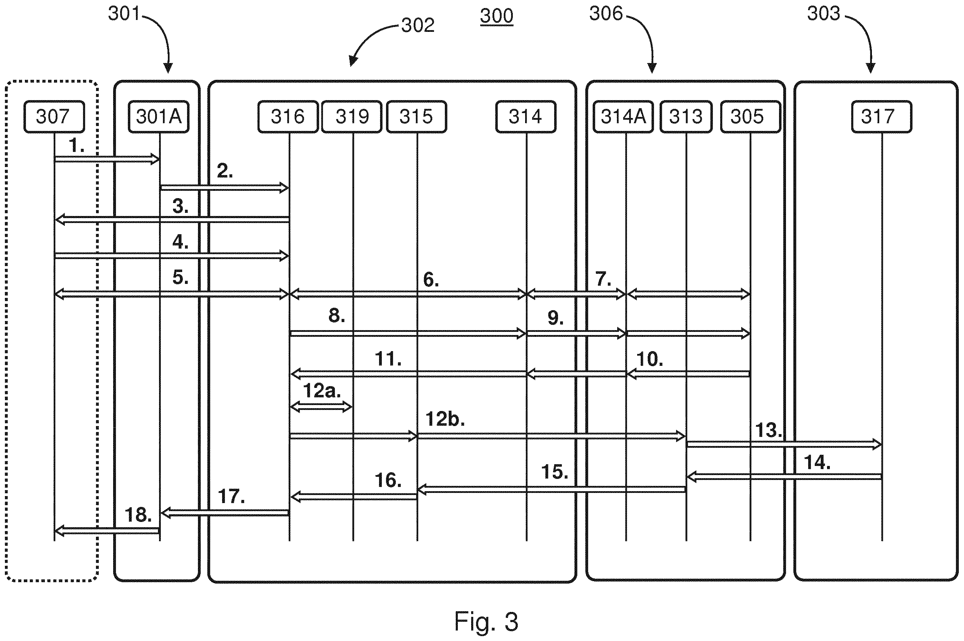

Fig. 3 shows the authentication procedure for a system 300 using the 4G telecommunication standard. The depicted system exemplary illustrates a connection of the communication device to particular access and mobile core networks. However, this illustration is not intended to be limiting to particular networks.

The system 300 comprises a user device 307 including a SIM Card and an access network 301 with a radio base station, eNodeB 301A. Further, the system 300 comprises a mobile core network 302 comprising MME 316 and SGW 315 and DRA 314. The access network 301 and the core network 302 are operated by the same mobile network operator. The system 300 further comprises a communication device 306 comprising DRA 314, GPC 313 and an HSS 305. Moreover, the system 300 comprises a mobile core network 303 operated by a mobile virtual network operator and mobile virtual network enabler, respectively, which may be the same or different from the mobile network operator that operates the access network 301 and the core network 302. The mobile core network 303 comprises a PGW 317 for connecting to the public network.

As per step 1, the user device 307 initiates the authentication procedure by transmitting an attach request to the eNodeB 301A of the access network 301. The eNodeB 301A derives the MME 316 from the attach request, for example using RRC parameters indicating the selected network.

As per step 2, the eNodeB 301A transmits the attach request to the MME 316 in the core network 302 of the network operator assigned to the attach request.

As per step 3, if the user device is unknown to the MME 316, the MME 316 sends an identity request to the user device 307 to request the user specific number for authentication.

As per step 4, the user device responds with an identity response to the MME 316.

As per step 5, the user device transmits a secure authentication request including the user specific number to the MME 316.

As per step 6, the MME 316 transmits the authentication request to the DRA 314 included in the same mobile core network 302.

As per step 7, the DRA 314 in the core network 302 routes the authentication request including the user specific number to DRA 314A included in the communication device 306. DRA 314A included in the communication device 306 routes the authentication request including the user specific number to HSS 305 in the communication device 306. The HSS contains a plurality of user specific numbers each user specific number has authentication keys, and further on user specific services including an access point name of the communication device assigned to it. In the HSS 305 the user specific number is authenticated by ex-changing the authentication keys between the HSS 305 and the user device 307 by sending an authentication response message transmitted the same way as the authentication request was transmitted to the MME 316 and to the user device 307.

As per steps 8 and 9, the MME 316 sends for authorization purposes an update location request to the HSS 305. Now the HSS 305 will authorize the user specific services of the user specific number and acknowledges in steps 10 and 11 of the Update Location ACK message to the MME 316. The update location ACK message is transmitted from the HSS 305 via the DRAs 314 included in the communication device 306 and the mobile core network 302 to the MME 316. The up-date location response message contains an access point name (APN1) of the GPC 313 of the communication device.

As per step 12a, the MME 316 sends a DNS request to the DNS server 319 including APN1. The DNS server 319 will translate the access point name APN1 to a corresponding routable IP address, which belongs to the GPC 313 of the communication device 306 and sends back a DNS response to the MME 316.

As per step 12b, the MME 316 creates a session request, sending for example a "Create session request" message, which includes an access point name (APN1) based on information included in the update location ACK message and the IP address translated by the DNS 319. The APN1 is the indication of a gateway, i.e. the GPC 313 of the communication device acting as an intermediary between a core network and another core network or another public network, such as the public internet RPTSN. The MME 316 transmits the session request including the APN and the IP-address of APN1 via the SGW 315 in the mobile core network 302 to the GPC 313 in the communication device 306.

As per step 13, the GPC 313 in the communication device 306 terminates the CREATE SESSION Request message and setups a new CREATE SESSION REQUEST message to the second core network 303. In this context the GPC 313 checks the second database 240 coupled to the GPC 313 by matching the received IMSI and APN1. The database 240 provides back a new APN2 and/or IP-address. The GPC then setups a new CREATE SESSION Request to the PGW 317 of the second core network 303 by using these new APN2 and /or IP-address

As per steps 14 to 16 the PGW 317 transmits a session response message via the GPC 313 included in the communication device and the SGW 315 included in the network 302 to the MME 316.

As per steps 17 and 18 the MME transmits an attach accept message via the eNodeB 301A to the user device 307.

After completion of the attach procedure, the user device may transmit packet based data via the eNodeB 301A in the access network 301, the SGW 315 in the mobile core network 302, the GPC 313 included in the communication device 306 and the PGW 317 included in the authenticated mobile core network 303 to the public internet.

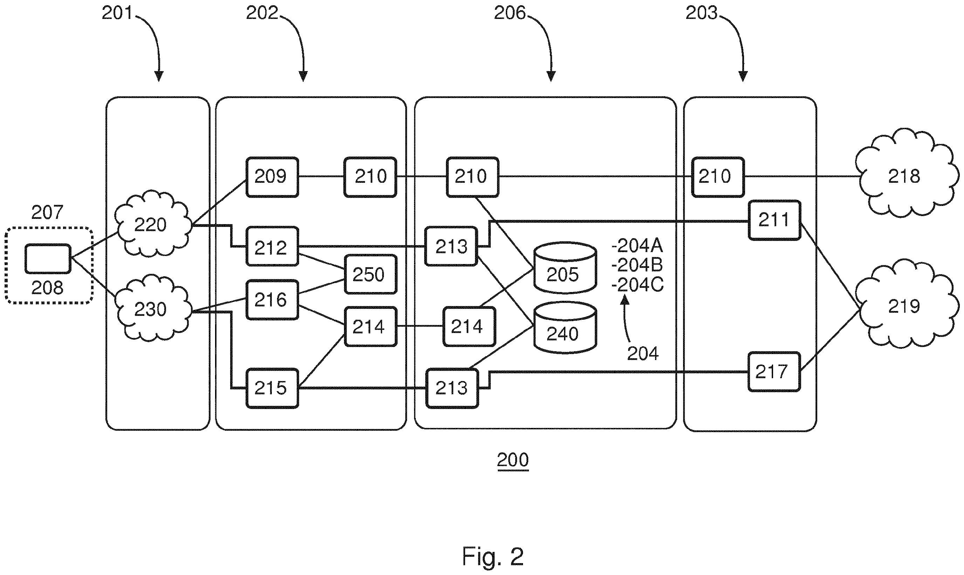

Fig. 2 shows a system for data transmission with specific access and mobile core networks exemplary for the 2G/3G and the 4G telecommunication standard. The depicted system exemplary illustrates a connection of the communication device to particular access and core networks. However, this illustration is not intended to be limiting.

The system 200 comprises a user device 207 comprising a SIM card 208 securely storing one or more of a plurality of user specific numbers from which a user specific number is selected. The selected user specific number is assigned to a particular mobile network operator. Moreover, the system 200 comprises an access network 201 and a mobile core network 202 operated by the mobile network operator assigned to the selected user specific number.

The core network 202 is connected to a communication device 206 that comprises an HLR/HSS 205 storing a plurality of user specific numbers 204 that comprises user specific numbers 204A, 204B, 204C assigned to different mobile network operators A, B, C. Further, the system 200 comprises a mobile core network 203 to establish a connection and to route data to the public networks 218, i.e. the public switched telephone network (PSTN) 218 and/or to the public internet 219.

The user device 207 may use the 2G/3G or the 4G telecommunication standard for authentication and data transmission. Using the 2G/3G telecommunication standard the user device 207 connects via access network 220 to the mobile core network 202. Using the 4G telecommunication standard the user device 207 connects via access network 230 to the core network 202.

In 2G/3G telecommunication standard communication, it is distinguished between control plane data for signaling purposes which is based on the SS7 and GTP-c protocol and user plane data for user data which is based on the GTP-u protocol. Typically for authentication of a user device the user specific number is transmitted in an authentication request from the user device 207 using a circuit switched data channel.

To authenticate the user device 207 to the network the user specific number is transmitted to the mobile core network 202 via the access network 201. The mobile switching center 209 (MSS) transmits the user specific number via the signaling transfer point (210) to the HLR of the communications device. In order to route the authentication request, the MSS 209 may recognize the selected user specific number by a combination of digits or other parameters. In the HLR 205 of the communication device the user specific number is matched to a copy of the plurality of user specific numbers and, if the matching is successful the user device is authenticated by sending an authentication response message.

For the transmission of packet switched data, the data are transmitted from the user device 207 via the 2G/3G access network 201. The user device is authenticated and authorized with the access network 201 by matching the user specific number with the plurality of user specific numbers stored in the database (HLR) of the communications device. The database (HLR) sends the APN of the communication device, which is authorized for the user specific number, to the Serving GPRS support node (SGSN) 212 of the mobile core network 202. Packet switched data transmission is based on the GTP protocol channel. The APN belongs to the GPC 213 of the communication device, which is a router that routes GTP protocol based data to a Gateway GPRS support node 211. The user device sends a PDP context request message to the serving GPRS support node (SGSN) 212 of the mobile core network. In response to the receipt of the PDP context request, the SGSN 212 contacts the DNS server 250, which resolves the APN into an IP-address. In the next step the SGSN can route the data to that IP-address.

The APN is assigned to the authenticated user specific number (stored in the database (HLR)). The packet switched data are transmitted from the access network to a serving GPRS support note (SGSN) 212 in the mobile core network 202. The SGSN 212 is a primary service delivery node that manages and routes packet switched data. The SGSN queries the DNS 250 of first mobile core network to resolve the IP-address of the APN of the GTP proxy controller (GPC) 213 included which was received by the SGSN from the HLR in the MAP_INSERT_SUBSCRIBER message. The DNS returns the IP-address of the GPC 213 to the SSGN 212. Based on the resolved IP-address, the SSGN 212 then sends a new PDP context request message that carries the APN to the GPC 213.

The GPC identifies the second core network by matching the IMSI and/or APN included in the PDP Context Request message to user and network specific information in the second database 240 coupled to the GPC. The identification includes an APN and/or an IP-address of the second core network.

The GPC can be configured by the operator of the communication device to choose a specific core network by changing the IP-address of the received packets to the IP-address of the specific core network. The GPC can be configured to match the combination of IMSI and APN received with the PDP Context Request message to the user and network specific information stored in the second database. The GPC then routes the data packets in accordance with the APN and/or IP-address of the second core network stored in the user and network specific information.

The GPC 213 included in the communication device 206 routes the data received from the SGSN 212 to a Gateway GPRS support note (GGSN) 211 included in the second mobile core network 203 assigned to the authorized user specific services identified by matching the IMSI and/or APN to the user and network specific information stored in the second database. The GGSN 211 establishes a connection to the public internet 219 and routes the packet switched data to the public internet 219.

A user device 207 may further transmit packet based data using the 4G communication standard. For the authentication of user specific services, the mobile device 207 transmits the selected user specific number to a home subscriber server (HSS) 205 included in the communication device 206 for authentication. Therefore, the user device transmits the selected user specific number in an authentication request via the 4G access network 230 of the mobile network operator assigned to the user selected user specific number to a mobility management entity (MME) 216 included in the mobile core network 202 of the mobile network operator assigned to the selected user specific number. The MME 216 is a primary delivery node in the 4G communication standard that manages data and routes data using the diameter protocol.

The MME 216 routes the authorization and authentication request including the selected user specific number to a diameter routing agent (DRA) 214 in the core network 202, e.g. based on parameters attached to the authorization and authentication request or a number of digits of the user specific number. The DRA 214 is a router that connects to an end point, the HSS or to another DRA router using the diameter protocol. The DRA 214 in the mobile core network 202 routes the authorization and authentication request to a DRA 214 included in the communication device 206. The DRA 214 included in the Communication device 206 routs the authentication and authorization request to the HSS 205 for user authentication and service authorization. In the HSS 205 the selected user specific number is matched to the plurality of user specific numbers. After successful matching user specific services to the selected user specific number are authenticated. Thereafter, the communication device 206 transmits an authentication and an authorization response message including the access point name of the communication device assigned to the user specific number to core network 202 via the DRAs 214 in the communication device 206 and in the core network 202. The authentication and authorization response message will be transmitted to the MME 216 in the core network.

Upon authentication and authorization of user specific services, the user device 207 is allowed to transmit packet based data via the 4G access network 230 to a serving gateway SGW 215 included in the mobile core network 202. Similar to an SGSN 212 in the 2G/3G communication standard the SGW 215 is a router for packet based data in the 4G communication standard. Based on information, i.e. the access point name of the communication device included in the authorization response, the SGW routes the received packed switched data to the communication device 206. The communication device 206 may include a GPC 213 that receives the packet based data from the SGW 215. Based on the matching the user specific number and/or the APN of the communication device to user specific profiles stored in the second database 240, the user specific profile including the combination of user specific number and APN a different APN and/or IP-address of a second core network assigned to said combination, the GPC 213 included in the communication device 206 routes the data to a mobile core network 203 assigned to the user specific profile. Optionally, the GPC changes the APN and IP-address to correspond to the APN and the IP-address of the second core network specified by the user specific profile. This mobile core network 203 includes a PDM gateway (PGW) 217 that receives the data from the GPC 213 in the communication device 206. The PGW 217 may establish a connection with the public internet 219 and may route data to the public internet 219.

It may be understood that the described way to transmit data via the 2G/3G to the communication standard or the 4G telecommunication standard is not intended to be limiting other communication standards are also imaginable, but are left out at this point.

## Claims

1. A communication device for connecting a first user device, said user device authenticating and authorizing to a first core network, with a second core network for connecting to a public network, the communication device comprising:
a first database storing a plurality of first user profiles including one or more user specific numbers and one or more address names of the communication device assigned to each user specific number;
a second database storing a plurality of second user and network specific information including a user specific number, an address name of the communication device and the addresses and address names of second core networks;
first signalling means to enable signalling between the first user device and the first database;
a GTP proxy controller, GPC , wherein
the communication device is configured to, upon receipt of a first request message at the first database, send a first response message to the first core network and;
the GPC is configured to receive a second request message from the first core network, the second request message including a user specific number and an address name of the communication device, and being a session request message,
wherein the GPC is configured to terminate the second request message and to set up a new session request message as third request message to a second core network,
wherein the GPC is configured to identify the second core network from a plurality of core networks by matching the address name of the communication device included in the second request message to one of the plurality of second user and network specific information stored in the second database,
wherein the communication device is configured to establish a connection with the second core network by sending the third request message to the second core network,
wherein after the establishment of the connection, the GPC is configured to route data of the first user device from the first core network to the second core network.

2. A communication device as in claim 1, wherein the first database contains a plurality of user specific numbers, each of said numbers being assigned to the communication device and a respective address name.

3. A communication device as in claim 1, which has multiple address names.

4. A communication device as in claim 1, wherein the communication device couples the first user device to a second core network and the second core network depends on the address name under which the second request message is received.

5. A communication device as in claim 4, wherein the GPC has several address names, each address name being assigned to a second core network.

6. A communication device as in claim 1, wherein the communication device comprises several GPCs, wherein each GPC has a distinct address and couples the first user device to a different second core network.

7. A communication device as in any of the preceding claims , wherein the second database includes routing information containing the address names of the communication device, each of said address names being assigned to an address of a second core network and/or an address name of the second core network.

8. A communication device as in any of the preceding claims, wherein a user specific number is an IMSI and fan address name of the communication device is an access point name and the address of a second core network is an IP-address and the address name of a the second core network is an access point name.

9. A communication device as in any of the preceding claims, wherein the first request message is the Update location request message of the attach procedure including the IMSI of the first user device and the response message is the Update location ACK message including the 'Access Point Name' (APN) of the communication device.

10. A communication device as in any of the preceding claims, wherein the second request message is the "create session request "message including the IMSI of the first user device and the APN of the communication device and the third request message is the "create session request" message including the IMSI of the first user device and the APN of the identified second core network and the IP address of said identified the second core network.

11. A communication device as in any of the preceding claims, wherein the second user and network specific information stored in the second database include the IMSI of the first user device and an APN and/or IP address of the second core network assigned to said IMSI.

12. A method for connecting, by a communication device, a first user device, said user device authenticating and authorizing to a first core network, with a second core network for connecting to a public network, the communication device comprising a first database, a second database, first signalling means, a GTP proxy controller, GPC, the method comprising:
storing, at the first database a plurality of first user profiles including one or more user specific numbers and one or more address names of the communication device assigned to each user specific number;
storing, at the second database, a plurality of second user and network specific information including a user specific number, an address name of the communication device and the addresses of second core networks;
enabling, by the first signalling means, signalling between the first user device and the first database;
sending, upon receipt of a first request message at the first database, a response message to the first core network and;
receiving, by the GPC, a second request message from the first core network, the second request message including a user specific number and an address name of the communication device, and being a session request message;
terminating, by the GPC, the second request message and setting up, by the GPC, a new session request message as third request message to a second core network, wherein the GPC selects **the** second core network from a plurality of core networks by matching the address name of the communication device included in the second request message to one of the plurality of second user and network specific information stored in the second database;
establishing a connection between the GPC and the second core network by sending the third request message to the second core network;
after establishing the connection, routing, by the GPC, data of the first user device from the first core network to the second core network.

13. The method of claim 12, wherein the third request message and the second request message are create session request " messages and the response messages to the third and second request messages are "create session response" messages.

14. The method of claim 12 and 13, wherein the user and network specific information contains the access point name and/or the IP-address of the second core network assigned to each user specific number.

15. The method as in any of claims 12 to 14 comprising assigning within the second database address names of second core networks to each address name of the communication device.

## Patentansprüche

1. Kommunikationsgerät zum Verbinden eines ersten Benutzergeräts, das sich gegenüber einem ersten Kernnetz authentifiziert und autorisiert, mit einem zweiten Kernnetz zum Verbinden mit einem öffentlichen Netz, wobei das Kommunikationsgerät umfasst:
eine erste Datenbank, die eine Vielzahl von ersten Benutzerprofilen speichert, einschließlich einer oder mehrerer benutzerspezifischer Nummern und einem oder mehreren Adressnamen des Kommunikationsgeräts, die jeder benutzerspezifischen Nummer zugeordnet sind;
eine zweite Datenbank, in der eine Vielzahl von zweiten benutzer- und netzspezifischen Informationen gespeichert sind, einschließlich einer benutzerspezifischen Nummer, eines Adressnamens des Kommunikationsgeräts und der Adressen und Adressnamen von zweiten Kernnetzen;
erste Signalisierungsmittel, um die Signalisierung zwischen dem ersten Benutzergerät und der ersten Datenbank zu ermöglichen;
einen GTP-Proxy-Controller, GPC,
wobei das Kommunikationsgerät so konfiguriert ist, dass es beim Empfangen einer ersten Anforderungsnachricht an der ersten Datenbank eine erste Antwortnachricht an das erste Kernnetz sendet und;
der GPC so konfiguriert ist, dass er eine zweite Anforderungsnachricht vom ersten Kernnetz empfängt, wobei die zweite Anforderungsnachricht eine benutzerspezifische Nummer und einen Adressnamen des Kommunikationsgeräts enthält und eine Sitzungsanforderungsnachricht ist,
wobei der GPC so konfiguriert ist, dass er die zweite Anforderungsnachricht beendet und eine neue Sitzungsanforderungsnachricht als dritte Anforderungsnachricht an ein zweites Kernnetz aufbaut,
wobei der GPC so konfiguriert ist, dass er das zweite Kernnetz aus einer Vielzahl von Kernnetzen identifiziert, indem er den in der zweiten Anforderungsnachricht enthaltenen Adressnamen des Kommunikationsgeräts mit einer der Vielzahl von zweiten benutzer- und netzspezifischen Informationen abgleicht, die in der zweiten Datenbank gespeichert sind,
wobei das Kommunikationsgerät so konfiguriert ist, dass es eine Verbindung mit dem zweiten Kernnetz herstellt, indem es die dritte Anforderungsnachricht an das zweite Kernnetz sendet,
wobei der GPC so konfiguriert ist, dass er nach Herstellung der Verbindung Daten des ersten Benutzergeräts vom ersten Kernnetz zum zweiten Kernnetz leitet.

2. Kommunikationsgerät nach Anspruch 1, wobei die erste Datenbank eine Vielzahl von benutzerspezifischen Nummern enthält, wobei jede dieser Nummern dem Kommunikationsgerät und einem entsprechenden Adressnamen zugeordnet ist.

3. Kommunikationsgerät nach Anspruch 1, wobei dieses mehrere Adressnamen hat.

4. Kommunikationsgerät nach Anspruch 1, wobei das Kommunikationsgerät das erste Benutzergerät mit einem zweiten Kernnetz koppelt und das zweite Kernnetz von dem Adressnamen abhängt, unter dem die zweite Anforderungsmeldung empfangen wird.

5. Kommunikationsgerät nach Anspruch 4, wobei der GPC mehrere Adressnamen hat und jeder Adressname einem zweiten Kernnetz zugeordnet ist.

6. Kommunikationsgerät nach Anspruch 1, wobei das Kommunikationsgerät mehrere GPCs umfasst, wobei jeder GPC eine eigene Adresse hat und das erste Benutzergerät mit einem anderen zweiten Kernnetz koppelt.

7. Kommunikationsgerät nach einem der vorhergehenden Ansprüche, wobei die zweite Datenbank Routing-Informationen enthält, die die Adressnamen des Kommunikationsgeräts enthalten, wobei jeder der Adressnamen einer Adresse eines zweiten Kernnetzes und/oder einem Adressnamen des zweiten Kernnetzes zugeordnet ist.

8. Kommunikationsgerät nach einem der vorhergehenden Ansprüche, wobei eine benutzerspezifische Nummer eine IMSI ist und ein Adressname des Kommunikationsgeräts ein Zugangspunktname ist und die Adresse eines zweiten Kernnetzes eine IP-Adresse ist und der Adressname des zweiten Kernnetzes ein Zugangspunktname ist.

9. Kommunikationsgerät nach einem der vorhergehenden Ansprüche, wobei die erste Anforderungsnachricht die Standortaktualisierungsanforderungsnachricht des Anbringungsverfahrens ist, die die IMSI des ersten Benutzergeräts enthält, und die Antwortnachricht die Standortaktualisierungs-ACK-Nachricht ist, die den "Access Point Name" (APN) des Kommunikationsgeräts einschließt.

10. Kommunikationsgerät nach einem der vorhergehenden Ansprüche, wobei die zweite Anforderungsnachricht die Nachricht "Sitzungsanforderung erstellen" ist, die die IMSI des ersten Benutzergeräts und den APN des Kommunikationsgeräts enthält, und die dritte Anforderungsnachricht die Nachricht "Sitzungsanforderung erstellen" ist, die die IMSI des ersten Benutzergeräts und den APN des identifizierten zweiten Kernnetzes und die IP-Adresse des genannten identifizierten zweiten Kernnetzes einschließt.

11. Kommunikationsgerät nach einem der vorhergehenden Ansprüche, wobei die zweiten benutzer- und netzspezifischen Informationen, die in der zweiten Datenbank gespeichert sind, die IMSI des ersten Benutzergeräts und eine APN- und/oder IP-Adresse des zweiten Kernnetzes, die der IMSI zugewiesen ist, umfassen.

12. Verfahren zum Verbinden, durch eine Kommunikationsgerät, einer ersten Benutzervorrichtung, die sich gegenüber einem ersten Kernnetz authentifiziert und autorisiert, mit einem zweiten Kernnetz zum Verbinden mit einem öffentlichen Netz, wobei das Kommunikationsgerät eine erste Datenbank, eine zweite Datenbank, ein erstes Signalisierungsmittel, einen GTP-Proxy-Controller, GPC, umfasst, wobei das Verfahren umfasst:
Speichern einer Vielzahl von ersten Benutzerprofilen in der ersten Datenbank, einschließlich einer oder mehrerer benutzerspezifischer Nummern und eines oder mehrerer Adressnamen des Kommunikationsgeräts, die jeder benutzerspezifischen Nummer zugeordnet sind;
Speichern einer Vielzahl von zweiten benutzer- und netzspezifischen Informationen in der zweiten Datenbank, einschließlich einer benutzerspezifischen Nummer, eines Adressnamens des Kommunikationsgeräts und der Adressen von zweiten Kernnetzen;
Aktivieren der Signalisierung zwischen dem ersten Benutzergerät und der ersten Datenbank durch das erste Signalisierungsmittel;
Senden einer Antwortnachricht an das erste Kernnetz beim Empfangen einer ersten Anforderungsnachricht an der ersten Datenbank; und
Empfangen einer zweiten Anforderungsnachricht vom ersten Kernnetz durch den GPG, wobei die zweite Anforderungsnachricht eine benutzerspezifische Nummer und einen Adressnamen des Kommunikationsgeräts enthält und eine Sitzungsanforderungsnachricht ist;
Beenden der zweiten Anforderungsnachricht durch den GPG und Aufbauen einer neuen Sitzungsanforderungsnachricht als dritte Anforderungsnachricht an ein zweites Kernnetz durch den GPG, wobei der GPG das zweite Kernnetz aus einer Vielzahl von Kernnetzen auswählt, indem er den in der zweiten Anforderungsnachricht enthaltenen Adressnamen des Kommunikationsgeräts mit einer der Vielzahl von in der zweiten Datenbank gespeicherten zweiten benutzer- und netzspezifischen Informationen abgleicht;
Herstellen einer Verbindung zwischen dem GPG und dem zweiten Kernnetz durch Senden der dritten Anforderungsnachricht an das zweite Kernnetz;
nach Herstellen der Verbindung, Weiterleiten von Daten des ersten Benutzergeräts vom ersten Kernnetz zum zweiten Kernnetz durch den GPG.

13. Verfahren nach Anspruch 12, wobei die dritte Anforderungsnachricht und die zweite Anforderungsnachricht die Nachrichten "Sitzungsanforderung erstellen" sind, und die Antwortnachrichten auf die dritten und zweiten Anforderungsnachrichten die Nachrichten "Sitzungsanforderung erstellen" sind.

14. Verfahren nach Anspruch 12 und 13, wobei die benutzer- und netzspezifischen Informationen Informationen über den Namen des Zugangspunkts und/oder die IP-Adresse des zweiten Kernnetzes enthalten, die jeder benutzerspezifischen Nummer zugewiesen sind.

15. Verfahren nach einem der Ansprüche 12 bis 14, bei dem jedem Adressnamen des Kommunikationsgeräts in der zweiten Datenbank Adressnamen von zweiten Kernnetzen zugewiesen werden.

## Revendications

1. Dispositif de communication pour connecter un premier dispositif utilisateur, ledit dispositif utilisateur s'authentifiant et s'autorisant auprès d'un premier réseau d'infrastructure, à un second réseau d'infrastructure pour une connexion à un réseau public,
le dispositif de communication comprenant :
une première base de données stockant une pluralité de premiers profils utilisateur comportant un ou plusieurs numéros spécifiques à un utilisateur et un ou plusieurs noms d'adresse du dispositif de communication assigné à chaque numéro spécifique à un utilisateur ;
une seconde base de données stockant une pluralité de secondes informations spécifiques à un utilisateur et des réseaux comportant un numéro spécifique à un utilisateur, un nom d'adresse du dispositif de communication et les adresses et noms d'adresse de seconds réseaux d'infrastructure ;
des premiers moyens de signalisation pour activer une signalisation entre le premier dispositif utilisateur et la première base de données ;
un dispositif de commande mandataire GTP, GPC, dans lequel le dispositif de communication est configuré pour, lors de la réception d'un premier message de demande au niveau de la première adresse, envoyer un premier message de réponse au premier réseau d'infrastructure et ;
le GPC est configuré pour recevoir un deuxième message de demande à partir du premier réseau d'infrastructure, le deuxième message de demande comportant un numéro spécifique à un utilisateur et un nom d'adresse du dispositif de communication, et étant un message de demande de session,
dans lequel le GPC est configuré pour mettre fin au deuxième message de demande et pour préparer un nouveau message de demande de session en tant que troisième message de demande vers un second réseau fédérateur,
dans lequel le GPC est configuré pour identifier le second réseau d'infrastructure à partir d'une pluralité de réseaux d'infrastructure en mettant en correspondance le nom d'adresse du dispositif de communication compris dans le deuxième message de demande avec une de la pluralité de secondes informations spécifiques à un utilisateur et des réseaux stockées dans la seconde base de données,
dans lequel le dispositif de communication est configuré pour établir une connexion avec le second réseau d'infrastructure en envoyant le troisième message de demande au second réseau d'infrastructure,
dans lequel après l'établissement de la connexion, le GPC est configuré pour acheminer des données du premier dispositif utilisateur à partir du premier réseau d'infrastructure jusqu'au second réseau d'infrastructure.

2. Dispositif de communication selon la revendication 1, dans lequel la première base de données contient une pluralité de numéros spécifiques à un utilisateur, chacun desdits numéros étant assigné au dispositif de communication et à un nom d'adresse respectif.

3. Dispositif de communication selon la revendication 1, qui a de multiples noms d'adresse.

4. Dispositif de communication selon la revendication 1, dans lequel le dispositif de communication couple le premier dispositif utilisateur à un second réseau d'infrastructure et le second réseau d'infrastructure dépend du nom d'adresse sous lequel le deuxième message de demande est reçu.

5. Dispositif de communication selon la revendication 4, dans lequel le GPC a plusieurs noms d'adresse, chaque nom d'adresse étant assigné à un second réseau d'infrastructure.

6. Dispositif de communication selon la revendication 1, dans lequel le dispositif de communication comprend plusieurs GPC, dans lequel chaque GPC a une adresse distincte et couple le premier dispositif utilisateur à un second réseau d'infrastructure différent.

7. Dispositif de communication selon l'une quelconque des revendications précédentes, dans lequel la seconde base de données comporte des informations d'acheminement contenant les noms d'adresse du dispositif de communication, chacun desdits noms d'adresse étant assigné à une adresse d'un second réseau d'infrastructure et/ou un nom d'adresse du second réseau d'infrastructure.

8. Dispositif de communication selon l'une quelconque des revendications précédentes, dans lequel un numéro spécifique à un utilisateur est une IMSI et un nom d'adresse du dispositif de communication est un nom de point d'accès et l'adresse d'un second réseau d'infrastructure est une adresse IP et le nom d'adresse d'un second réseau d'infrastructure est un nom de point d'accès.

9. Dispositif de communication selon l'une quelconque des revendications précédentes, dans lequel le premier message de demande est le message de demande de mise à jour de localisation de la procédure de rattachement comportant l'IMSI du premier dispositif utilisateur et le message de réponse est le message d'ACK de mise à jour de localisation comportant le « nom de point d'accès » (APN) du dispositif de communication.

10. Dispositif de communication selon l'une quelconque des revendications précédentes, dans lequel le deuxième message de demande est le message de « demande de création de session » comportant l'IMSI du premier dispositif utilisateur et l'APN du dispositif de communication et le troisième message de demande est le message de « demande de création de session » comportant l'IMSI du premier dispositif utilisateur et l'APN du second réseau d'infrastructure identifié et l'adresse IP dudit second réseau d'infrastructure identifié.

11. Dispositif de communication selon l'une quelconque des revendications précédentes, dans lequel les secondes informations spécifiques à un utilisateur et des réseaux stockées dans la seconde base de données comportent l'IMSI du premier dispositif utilisateur et un APN et/ou une adresse IP du second réseau d'infrastructure assigné à ladite IMSI.

12. Procédé pour la connexion, par un dispositif de communication, d'un premier dispositif utilisateur, ledit dispositif utilisateur s'authentifiant et s'autorisant auprès d'un premier réseau d'infrastructure, à un second réseau d'infrastructure pour une connexion à un réseau public, le dispositif de communication comprenant une première base de données, une seconde base de données, des premiers moyens de signalisation, un dispositif de commande mandataire GTP, GPC, le procédé comprenant :
le stockage, au niveau de la première base de données, d'une pluralité de premiers profils utilisateur comportant un ou plusieurs numéros spécifiques à un utilisateur et un ou plusieurs noms d'adresse du dispositif de communication assigné à chaque numéro spécifique à un utilisateur ;
le stockage, au niveau de la seconde base de données, d'une pluralité de secondes informations spécifiques à un utilisateur et des réseaux comportant un numéro spécifique à un utilisateur, un nom d'adresse du dispositif de communication et les adresses de seconds réseaux d'infrastructure ;
l'activation, par les premiers moyens de signalisation, d'une signalisation entre le premier dispositif utilisateur et la première base de données ;
l'envoi, lors de la réception d'un premier message de demande au niveau de la première base de données, d'un message de réponse au premier réseau d'infrastructure et ;
la réception, par le GPC, d'un deuxième message de demande à partir du premier réseau d'infrastructure, le deuxième message de demande comportant un numéro spécifique à un utilisateur et un nom d'adresse du dispositif de communication, et étant un message de demande de session ;
le fait de mettre fin, par le GPC, au deuxième message de demande et la préparation, par le GPC, d'un nouveau message de demande de session en tant que troisième message de demande vers un second réseau d'infrastructure, dans lequel le GPC sélectionne le second réseau d'infrastructure à partir d'une pluralité de réseaux d'infrastructure en mettant en correspondance le nom d'adresse du dispositif de communication compris dans le deuxième message de demande avec une de la pluralité de secondes informations spécifiques à un utilisateur et des réseaux stockées dans la seconde base de données ;
l'établissement d'une connexion entre le GPC et le second réseau d'infrastructure en envoyant le troisième message de demande au second réseau d'infrastructure ;
après l'établissement de la connexion, l'acheminement, par le GPC, de données du premier dispositif utilisateur à partir du premier réseau d'infrastructure jusqu'au second réseau d'infrastructure.

13. Procédé selon la revendication 12, dans lequel le troisième message de demande et le deuxième message de demande sont des messages de « demande de création de session » et les messages de réponse aux troisième et deuxième messages de demande sont des messages de « réponse de création de session ».

14. Procédé selon la revendication 12 et 13, dans lequel les informations spécifiques à un utilisateur et des réseaux contiennent le nom de point d'accès et/ou l'adresse IP du second réseau d'infrastructure assigné à chaque numéro spécifique à un utilisateur.

15. Procédé selon l'une quelconque des revendications 12 à 14 comprenant l'assignation dans la seconde base de données de noms d'adresse de seconds réseaux d'infrastructure à chaque nom d'adresse du dispositif de communication.
